# FASCICULE DE BREVET EUROPEEN

(11) **EP 0 413 619 B1**
(45) Date de publication et mention de la délivrance du brevet: **29.09.1993**
(21) Numéro de dépôt: 90402201.9
(22) Date de dépôt: 01.08.1990
(51) Int. Cl.: C03B 23/025, C03B 35/16, C03B 35/18, C03B 23/033

(54) **Perfectionnement aux techniques de bombage de feuilles de verre**
Verfahren zum Biegen von Glastafeln
Method of bending glass sheets

(30) Priorité: 14.08.1989 FR 8910871
(43) Date de publication de la demande: 20.02.1991
(73) Titulaire: SAINT-GOBAIN VITRAGE INTERNATIONAL, 92400 Courbevoie (FR)
(72) Inventeur: Letemps, Bernard, F-60150 Thourotte (FR); Leclercq, Jacques, F-80240 Roisel (FR)
(74) Mandataire: Menes, Catherine

(56) Documents cités:
- EP-A- 0 263 030
- GB-A- 1 494 291
- US-A- 4 043 786
- US-A- 4 226 608
- US-A- 4 773 925

## Description

L'invention a trait au bombage et à la trempe de feuilles de verre. Plus précisément l'invention concerne la réalisation d'un rouleau de formage à rayon de courbure ajustable et l'utilisation de ce rouleau de formage dans une machine de bombage-trempe dans laquelle le lit de conformation est constitué par des éléments tournants disposés selon un trajet à profil courbe dans la direction de défilement des feuilles de verre. L'invention a également pour objet un mode opératoire permettant à partir de cette machine de bombage l'obtention de vitrages de forme complexe. L'invention s'applique notamment à la production de vitrages automobiles bombés-trempés.

Du brevet français FR-B-2442219, il est connu de procéder au bombage de feuilles de verre préalablement chauffées à température de ramollissement en les faisant défiler sur un lit de conformation, comportant une zone terminale de trempe, constitué par des éléments tournants disposés selon un trajet à profil courbe, le plus souvent à profil circulaire avec une concavité de préférence tournée vers le haut. Le rayon du trajet des éléments tournants correspond au rayon de courbure conféré à la feuille de verre dans sa direction parallèle à la direction de défilement. Un perfectionnement important de ce procédé, connu du brevet EP-B-133114, consiste à prévoir un transporteur d'évacuation dont le premier élément est constitué par le dernier élément du lit de conformation, et présentant une pente différente de celle de ce lit, un élément basculant étant de plus associé à ce premier élément du transporteur d'évacuation. Des installations de ce type permettent la production de vitrages automobiles selon des cadences exceptionnellement élevées car les feuilles de verre peuvent se suivre très près les unes des autres, et avec une qualité optique très grande due notamment à un soutien quasi-uniforme de toute la surface de la feuille de verre pendant toute l'opération de formage.

Toutefois les réalisations industrielles connues à ce jour se limitent le plus souvent à la production de vitrages cylindriques c'est-à-dire obtenus au moyen d'éléments tournants constitués par des tiges droites, non cintrées. Or il existe parallèlement à la demande de vitrages cylindriques, destinées par exemple aux vitres latérales équipées d'un dispositif lève-vitres, une demande qui ne fait que grandir de vitrages à formes plus complexes notamment présentant une seconde courbure dans une direction perpendiculaire à celle de sa courbure principale.

Du brevet FR-B-2442219, il est connu d'utiliser pour la production de tels vitrages à double rayon de courbure le procédé de bombage sur un lit de conformation à profil courbe constitué par des éléments tournants eux-mêmes cintrés, les feuilles de verre défilant alors entre deux éléments tournants de formes complémentaires. De la littérature de cet art, on connaît essentiellement 3 types d'éléments tournants cintrés : les rouleaux en forme de diabolo, associés à des rouleaux en forme de fuseau, les rouleaux du type guidons, et les rouleaux contrefléchis.

Par définition, le diamètre d'un rouleau du type diabolo ou du type fuseau varie de manière constante sur toute la longueur du rouleau; de ce fait la vitesse périphérique du rouleau est de même variable sur toute la longueur du rouleau et les vitesses d'entraînement des parties latérales des feuilles de verre et des parties centrales sont différentes; cette différence de vitesse interdit de traiter des vitrages dont le bord avant ne serait pas parallèle à l'axe du rouleau et les côtés perpendiculaires à cet axe. De plus à la partie centrale ventrue du fuseau correspond la partie centrale mince du diabolo complémentaire; autrement dit la vitesse d'entraînement du verre par le rouleau inférieur et la vitesse d'entraînement par le rouleau supérieur correspondant sont alors différentes. Dans l'axe de la ligne, l'entraînement par le fuseau peut ainsi être deux fois plus rapide que l'entraînement par le diabolo. Un tel schéma n'est guère favorable à la qualité optique et suppose de plus de délicats réglages pour chaque nouvelle installation. De plus le rayon de courbure transversale est imposé une fois pour toutes par la forme du diabolo ou du fuseau de sorte que la production d'une gamme variée de vitrage n'est envisageable qu'au prix d'investissements prohibitifs.

Le second type d'élément tournant en forme est constitué par des rouleaux du type guidons, formés par des tiges cintrées revêtues de gaines tubulaires tournantes déformables axialement mais rigides en rotation, lesdites gaines reposant sur les tiges cintrées par l'intermédiaire de bagues de glissement et étant recouvertes d'une protection par exemple par enroulement de fils de silice ou gainage avec un tissu ou un tricot en fibres de silice ou autres fibres réfractaires. En faisant varier l'inclinaison de ces guidons comme il est connu par exemple des brevets et certificats d'additions français 1476785, 92064, 2129919, 2144523, 2189330, on modifie le rayon de courbure du lit défini par ces guidons. D'un diamètre constant, les guidons ont sur toute leur longueur une vitesse périphérique constante ce qui constitue un grand progrès par rapport aux rouleaux du type diabolo ou fuseau. Mais appliqués à un lit de conformation à trajet courbe, ces guidons imposent toutefois une courbure transversale minimale car ils ne permettent pas la définition d'un lit de conformation purement cylindrique ce qui ressort à l'évidence de pures considérations géométriques. D'autre part ces guidons doivent en pratique être espacés d'au moins 50 mm en raison de l'encombrement des gaines et des bagues de glissement et également en raison de l'espace nécessaire à l'inclinaison des guidons ce qui entraîne une possibilité d'affaissement des feuilles de verre entre lesdits guidons préjudiciable à la qualité optique.

Le troisième et dernier type d'élément tournant en forme, à savoir le rouleau contrefléchi, ne présente aucun de ces défauts majeurs, au moins si on s'en tient aux considérations théoriques. Etant d'un diamètre constant - ou pouvant du moins l'être envisagé comme tel - un rouleau contrefléchi a une vitesse périphérique égale en tout point de sa surface. De plus la flèche qui lui est donnée peut bien évidemment être nulle ce qui permet de constituer un lit de conformation cylindrique.

De par leur conception même, les rouleaux contrefléchis connus de l'art ne se prêtent toutefois pas à la réalisation d'un lit de conformation selon un trajet à profil courbe. De la demande de brevet DE-A-3310357 il est par exemple connu un rouleau constitué par une barre centrale fixe contrefléchie et entourée d'une gaine qui est entraînée en rotation.

De la demande de brevet FR-A-2604700 est également connu un rouleau convoyeur constitué par une barre centrale fixe contrefléchie au moyen d'un dispositif de maintien qui déplace verticalement le centre de la barre ; par ailleurs cette barre est entourée de manchons autour desquels s'adaptent des porte-glace qui tournent en libre-rotation. On retrouve donc le principe de base décrit à propos des guidons d'une dissociation entre les parties mobiles qui assurent l'entraînement de la feuille de verre et les parties fixes qui définissent la forme du rouleau et donc celle qui sera conférée à la feuille de verre. Principe de dissociation que l'on retrouve à nouveau dans la demande de brevet FR-A-2572387.

Les dispositifs connus de cet art ne sont donc pas de véritables rouleaux contrefléchis mais sont systématiquement constitués par une barre centrale contrefléchie immobile et des éléments tournants autour de cette barre.

Ce qui est vrai pour les guidons, à savoir un espacement minimum relativement important entre deux rouleaux se retrouve donc à nouveau.

De plus les moyens utilisés pour la mise en flexion de la barre centrale ne sont pas non plus exempts d'inconvénients. Ainsi selon FR-A-2572387 la barre est coincée entre des paliers en ajustant sa position au moyen d'une série de douilles filetées ce qui suppose des temps de réglage extrêmement longs à chaque changement de production de façon à obtenir exactement le même rayon de courbure pour tous les rouleaux, que ceux-ci soient situés au-dessus ou au-dessous de la feuille de verre, avec des degrés d'usure des pièces qui peuvent bien sûr être différents d'un rouleau à l'autre. Le dispositif proposé par FR-A-2604700 permet lui un ajustement rapide du rayon de courbure mais utilise pour celà comme indiqué plus haut un dispositif de maintien qui agit sur le centre de la barre ou tout au moins sur une partie du rouleau au dessus de laquelle les feuilles de verre défilent; un tel dispositif ne peut donc d'aucune façon être appliqué à une barre cumulant les fonctions de définition de la forme et d'entraînement de la feuille de verre. Enfin selon DE-A-3310357, il est prévu de guider l'extrémité de la barre non équipée du dispositif d'entraînement en rotation de la gaine au moyen de deux galets entre lesquels la barre est pincée et qui sont montés aux sommets d'une plaque-support triangulaire dont le troisième sommet est articulé autour d'un axe perpendiculaire au plan contenant le centre du rouleau. Plaque et galets occupent un volume important sous et au dessus d'un rouleau - d'autant que les galets doivent être dimensionnés de manière à supporter des efforts très importants - de sorte qu'il n'est pas possible de disposer deux rouleaux contrefléchis l'un au dessus de l'autre,en ne les espaçant que de l'épaisseur d'une feuille de verre qui est typiquement comprise entre 2 et 6 mm.

Un autre exemple de rouleaux contrefléchis et connu du brevet US-A- 4 043 786.

Un premier but de la présente invention est de proposer un rouleau de formage, destiné par exemple à une installation de bombage-trempe de feuilles, directement entraîné en rotation et déformé par mise en flexion, les moyens de mise en flexion devant d'une part autoriser la superposition de deux rouleaux avec un écart entre les deux rouleaux superposés constant sur toute la longueur des rouleaux, susceptible d'être choisi aussi petit que possible et au moins inférieur à 2 mm et devant d'autre part autoriser la juxtaposition des rouleaux mis en flexion avec un entraxe entre rouleaux petit, par exemple inférieur à 50 mm de façon à assurer un parfait soutien de la surface des feuilles de verre. Par ailleurs la valeur de la flèche conférée au rouleau par la mise en flexion doit pouvoir être ajustée de façon quasi instantanée, sans interruption de la production de vitrages bombés.

Conformément à la revendication 1 ce but est atteint par un rouleau de formage constitué par un cylindre de révolution entraîné en rotation, cintré entre deux plans perpendiculaires à l'axe de symétrie du rouleau, chaque plan coupant le rouleau à proximité d'une de ses extrémités, les deux portions extrêmes extérieures aux plans sécants étant maintenues droites.

Comme il ressort de la définition donnée ci-dessus le rouleau selon l'invention comporte deux portions extrêmes droites inclinées l'une vers l'autre et une portion centrale qui se courbe naturellement de manière à rejoindre les deux extrémités. L'expression "rouleau contrefléchi" n'est donc pas rigoureusement exacte géométriquement parlant en ce qu'elle s'applique à des rouleaux selon l'invention non déformés par des appuis ponctuels mais comme tout se passe dans la portion centrale, la seule à être en contact avec la feuille de verre comme si le rouleau était effectivement contrefléchi nous continuerons par la suite à employer cette expression

Lors de l'opération de bombage les feuilles de verre auparavant chauffées à température de ramollissement, vont acquérir la courbure de la portion centrale des rouleaux sur laquelle elles sont convoyées. Le grand avantage du système de mise en flexion selon l'invention réside dans les portions terminales droites grâce auxquelles il est possible d'entraîner le rouleau en rotation sans que les points d'appui ne constituent des points d'usure; en revanche ce principe de mise en flexion limite la courbure susceptible d'être conférée ainsi à la feuille de verre mais selon des valeurs en pratique jamais rencontrées pour des vitrages automobiles du moins pour la courbure secondaire.

Avantageusement les parties extrêmes droites du rouleau selon l'invention sont guidées par des ensembles d'appuis tangentiels fixés sur un bras support commun pivotant autour d'un axe. De préférence cet axe de pivotement appartient au plan sécant ce qui minimise l'ampleur des déplacements et la force à exercer pour produire ce déplacement. Ces appuis tangentiels peuvent être des appuis distants ou des appuis ayant une relativement grande longueur. Ils sont constitués, par exemple par des roulements à aiguilles ou par un jeu de deux tubes placés sous le rouleau et un jeu complémentaire de deux autres tubes placés au-dessus, un des jeux étant centré sur le plan sécant, à la verticale de l'axe de pivotement d'un bras de support commun à tous les appuis tangentiels. L'extrémité libre de ce bras support commun non flexible est déplacée verticalement de sorte qu'on obtient un certain déplacement angulaire du bras qui provoque la flexion du rouleau.

Le déplacement vertical de l'extrémité est dû par exemple à l'action d'un levier dont la commande est assurée par exemple par une came mécanique, un vérin pneumatique, un vérin hydraulique ou un vérin électrique, ce dernier type étant plus spécialement préféré pour des raisons qui seront données dans la suite de ce mémoire.

Le rouleau selon l'invention peut être utilisé pour réaliser un lit de conformation par exemple pour un formage du verre par affaissement, et se substitue alors avantageusement à tout autre type de rouleau en forme, une simple action au niveau des leviers suffisant pour ajuster les rayons de courbure des différents rouleaux.

Toutefois le cas le plus fréquent est certainement celui où l'on cherche à faire passer une feuille de verre entre deux rouleaux superposés verticalement pour opérer une sorte de laminage ce qui permet d'opérer avec des vitesses de défilement plus grandes car il n'est plus besoin d'attendre que se produise la déformation due au propre poids de la feuille de verre ramollie.

La difficulté première rencontrée généralement avec des rouleaux dont le rayon de courbure est ajustable est dans ce cas celle de l'obtention de courbures rigoureusement identiques pour les rouleaux inférieurs et supérieurs. Ce problème est résolu de façon définitive par la superposition verticale de deux rouleaux de formage selon l'invention dont la courbure de chacun est due au déplacement angulaire d'un bras-support soulevé par un levier, les deux bras inférieur et supérieur étant disposés de manière telle que le bras support inférieur constitue lui-même le levier du bras support supérieur. Ceci bien entendu en veillant à ce que les plans sécants entre lesquels s'effectuent le cintrage des rouleaux inférieur et supérieur soient confondus. Au prix éventuel d'une réduction du diamètre des tubes d'appuis tangentiels on peut rapprocher les deux rouleaux jusqu'à les faire venir au contact l'un de l'autre de sorte qu'un tel ensemble s'adapte parfaitement à toutes les épaisseurs de verre. Avantageusement cette adaptation est obtenue en interposant entre les deux bras support, au niveau de leur surface d'appui une cale d'épaisseur de sorte que les surfaces courbes tangentant les rouleaux supérieurs ou inférieurs soient exactement espacées de l'épaisseur des feuilles de verre.

Selon une forme de réalisation particulièrement préférée de l'invention, les paires de rouleaux ainsi constituées sont utilisées pour la réalisation d'une machine de bombage et de trempe conforme à l'enseignement du brevet FR-B-2442219 c'est-à-dire en disposant les ensembles de rouleaux supérieur et inférieur selon un trajet à profil courbe. Dans ce cas la courbure principale est donnée par la courbure du trajet du lit de conformation et une courbure secondaire est communiquée aux feuilles de verre par la mise en flexion des rouleaux. Si cette courbure secondaire est très peu prononcée, ce qui est souvent le cas, on peut éventuellement n'utiliser les ensembles de rouleau de formage selon l'invention que pour équiper la zone de formage proprement dite et la première zone de trempe dans laquelle des déformations du verre peuvent encore se produire car les feuilles sont insuffisamment refroidies.

La polyvalence de la machine de bombage et de trempe selon l'invention est extrêmement grande. Tout d'abord on peut opérer sans mise en flexion des rouleaux ce qui permet la fabrication de vitrages cylindriques. Si ces vitrages sont par exemple émaillés on peut de plus opérer conformément aux enseignements de la demande de brevet EP-A-263030 c'est-à-dire en disposant les rouleaux le long d'un profil courbe à concavité tournée vers le haut, les rouleaux supérieurs à l'exception du dernier rouleau de la zone de formage étant alors disposés par rapport à la surface courbe tangentant les rouleaux inférieurs à une distance supérieure à l'épaisseur de la feuille de verre.

Mais il va de soi que l'intérêt principal de la machine de bombage et de trempe selon l'invention vient de ce qu'elle permet la fabrication de vitrages de formes complexes. Dans la mesure où les vitesses tangentielles des rouleaux inférieur et supérieur sont strictement identiques, l'orientation des feuilles de verre n'est pas modifiée lors de son passage entre ces rouleaux. Par conséquence les feuilles de verre peuvent être introduites dans la machine alors que leur bord avant n'est pas perpendiculaire à la direction de défilement et/ou avec des côtés non parallèles à cette direction de défilement. Par ailleurs il suffit de régler différemment les leviers commandant les mouvements des bras supports des appuis tangentiels des deux extrémités du rouleau de formage selon l'invention pour obtenir un dispositif excentré.

Enfin il peut être tiré avantage de la très grande simplicité du mode d'ajustement de la courbure des rouleaux de formage pour laisser opérer la machine de bombage-trempe selon l'invention selon un nouveau mode de fonctionnement. Celui-ci consiste à piloter les moyens d'ajustement de la courbure des rouleaux de formage pendant le moment même où une feuille de verre est amenée à passer entre ces rouleaux. Ce mode de fonctionnement conduit à un formage évolutif dans lequel le paramètre temps devient essentiel, la courbure d'un rouleau de formage variant en même temps que défile la feuille de verre. On peut de ce fait obtenir des vitrages dont le rayon de courbure secondaire évolue sur toute leur longueur parallèle à la direction de défilement, par exemple avec un bord avant droit et un bord arrière courbe.

Avec des ensembles de paires de rouleaux selon l'invention un tel pilotage revient à commander les déplacements des leviers de mise en flexion. Les moyens du type vérin utilisés pour commander ces déplacements doivent avoir des réactions aussi rapides et aussi précises que possible, ce qui est réalisable par exemple avec un vérin électrique auquel est associé une commande numérique et un calculateur faisant appel à des données en mémoire correspondant aux différentes formes de vitrage. En procédant selon ce mode opératoire pratiquement toutes les formes de vitrage peuvent être réalisées, et ceci dans une installation où les feuilles de verre défilent de façon continue, sans aucun arrêt, avec en conséquence des cadences de production sans commune mesure avec les installations dans lesquelles les feuilles de verre subissent par exemple une phase de pressage.

D'autres détails et caractéristiques avantageuses de l'invention sont décrits ci-après en référence aux dessins annexés qui représentent :
- Figure 1 :: un schéma de principe d'un ensemble selon l'invention de deux rouleaux de formage superposés.
- Figure 2 :: une vue d'ensemble d'une machine de bombage trempe selon l'invention.
- Figure 3 :: une demi-vue en coupe selon l'axe A-A de la figure 9.
- Figure 4 :: un schéma illustrant un bombage avec une évolution du rayon de courbure des rouleaux de formage au moment de la conformation d'une feuille de verre.
- Figure 5 :: un exemple de forme de vitrage susceptible d'être obtenue en procédant comme indiqué à la figure 4.

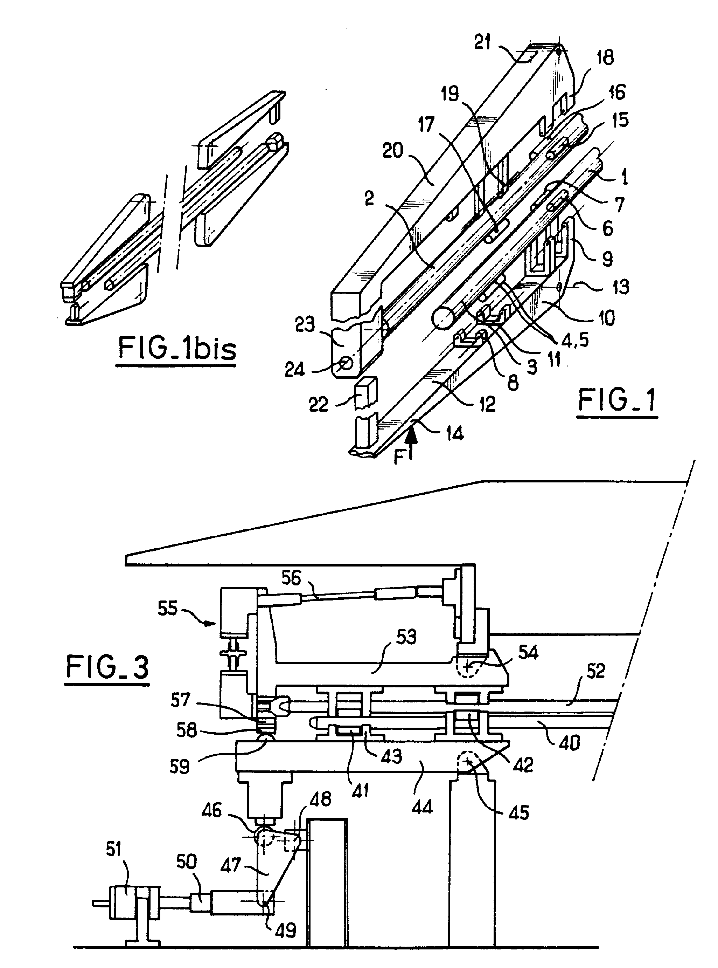

A la figure 1 est schématisé en perspective éclatée un ensemble de rouleaux de formage selon l'invention, étant entendu que seule est représentée une des extrémités de cet ensemble. Celui-ci est constitué par une paire de rouleaux 1 et 2. Ces rouleaux sont des cylindres de révolution de préférence en acier inoxydable ; leur diamètre est par exemple de 20 mm avec un faux rond inférieur à 1/10 de millimètre ; leur longueur est par exemple voisine de 2 mètres.

Le rouleau inférieur 1 comporte une extrémité libre 3 et est entraîné en rotation par son extrémité opposée ici non représentée. Il est de plus guidé dans sa partie terminale, sur une longueur de préférence inférieure à 0,5m et supérieure à 0,2m, par des appuis tangentiels formés par un jeu de tubes inférieurs 4,5 et un jeu de tubes supérieurs 6,7. Ces tubes sont de préférence réalisés dans un matériau présentant une dureté équivalente ou très légèrement supérieure à celle du matériau utilisé pour les rouleaux 1 et 2 et ont de préférence une longueur de plus de 10 mm et avantageusement de plus de 30 mm. Ils sont montés sur des fourches 8, 9 selon un montage autorisant leur libre rotation. Ces fourches 8 et 9 sont fixées éventuellement de manière réglable grâce à une rainure 11 sur un bras support 10, rigide, dont la surface 12 est rigoureusement plane. Le bras support 10 peut pivoter autour d'un axe 13 passant par le plan vertical médian coupant les tubes 6 et 7. L'autre extrémité du bras support 10, qui est tournée vers l'extérieur, est libre. Le diamètre des tubes 4 à 7 est de préférence choisi inférieur ou égal à celui des rouleaux 1 et 2. La largeur du bras support 10 est ainsi égale à environ 2 fois le diamètre des rouleaux 1 et 2. En conséquence à partir d'éléments selon l'invention et pour des rouleaux de par exemple 20 mm de diamètre, il est possible de réaliser un convoyeur dont le pas n'est que de 40 mm. Cette valeur peut être encore réduite en utilisant des tubes plus minces.

Le rouleau 2 est monté de préférence juste à la verticale du rouleau 1 et est de même guidé par des tubes 15, 16, 17 et un quatrième tube positionné derrière le tube 17 et ici non visible. Les tubes guidant le rouleau sont positionnés exactement à la verticale des tubes guidant le rouleau 1. Ces tubes sont montés sur des fourches 18, 19 fixées sur un second bras support 20 pivotant autour d'un axe 21 passant par le même plan vertical que l'axe 13. Le bras support 10 est également porteur d'une butée 22 qui fait face à une butée 23 portée par le bras supérieur 20. La butée 23 comporte de plus un passage 24 pour les éléments d'entraînement en rotation du rouleau 2.

Au dispositif schématisé à la figure 1 correspond un dispositif parfaitement symétrique placé de l'autre côté des rouleaux 1 et 2 comme le montre le schéma de la figure 1 bis.

Si on appuie sur l'extrémité libre 14 du bras 10 suivant la direction de la flèche F, on provoque le déplacement angulaire du bras qui pivote autour de l'axe 13. Par les butées 22 et 23, cet effort est directement transmis au bras 20. On obtient ainsi un fléchissement parfaitement identique des rouleaux 1 et 2, tout en maintenant droites leurs portions terminales. La flèche prise par les rouleaux dépend directement de la position verticale des bras 10 et 20, position qui peut être aisément modifiée par exemple par un vérin ou une came.

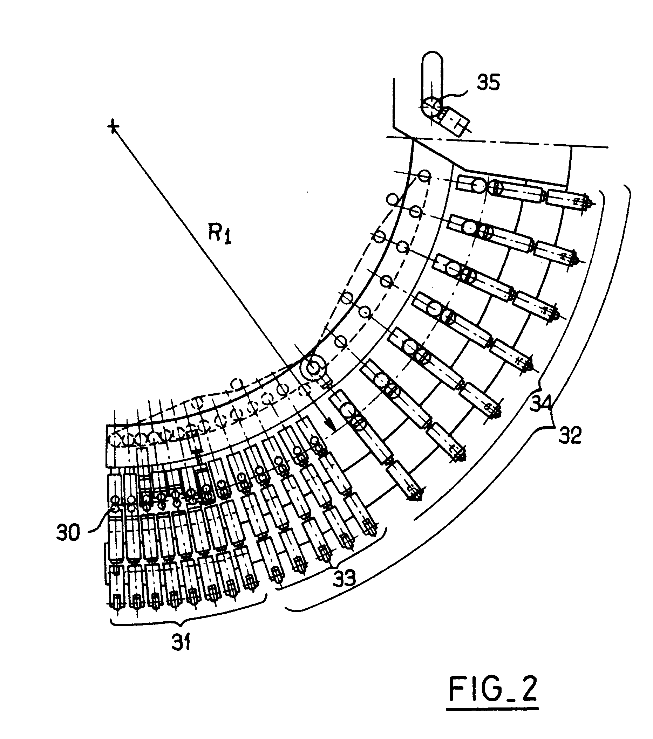

Les paires de rouleaux de formage montées comme schématisé à la figure 1 sont avantageusement utilisées pour constituer un convoyeur dont le trajet est à profil courbe, à concavité de préférence tournée vers le haut. Une machine de formage et de trempe comportant un tel convoyeur est schématisée à la figure 2.

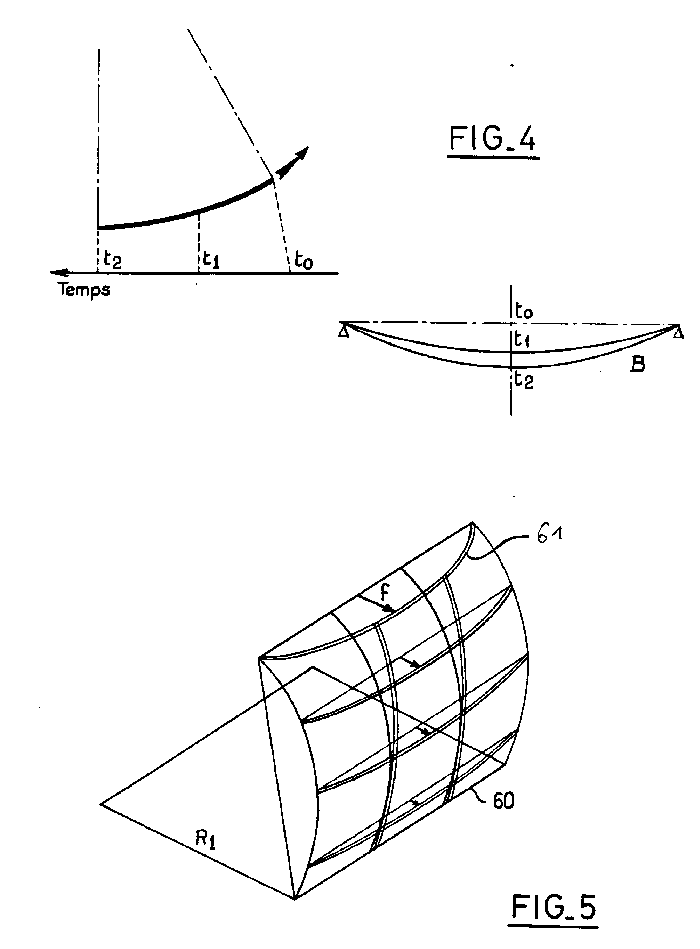

La machine de la figure 2 est conforme aux enseignements des brevets FR-B-2442219 et EP-B-113114. Elle comporte donc deux rangées de rouleaux de formage, le premier rouleau 30 de la rangée inférieure étant disposé exactement dans le prolongement d'un convoyeur traversant un four dans lequel les feuilles verre sont chauffées au delà de leur température de ramollissement. Les rouleaux de formage inférieurs et supérieurs sont associés par paire suivant le principe de montage illustré à la figure 1 et comme on peut le voir également sur la figure 3.

Dans le cas représenté figure 2, les 8 premiers ensembles de rouleaux, comptés dans le sens de défilement des feuilles de verre, constituent la zone de formage 31. Les éléments sont positionnés selon un écartement proche de l'entraxe minimum théorique. Les éléments suivants sont placés devant des caissons de soufflage dont les buses sont disposées de façon à souffler un gaz de refroidissement, notamment de l'air, à la fois sur la face inférieure et sur la face supérieure de la feuille de verre. Ils constituent donc la zone de trempe 32 qui se divise en fait en deux parties : une première partie ou zone de raidissement 33 dans laquelle le verre doit être encore maintenu pour éviter toute déformation parasite, constituée par des ensembles de bombage identiques à ceux de la zone de formage mais légèrement plus espacés pour laisser passer les gaz de soufflage et une dernière partie ou zone de refroidissement 34 pour laquelle on peut éventuellement utiliser de simples rouleaux droits, si du moins la courbure secondaire conférée par les rouleaux est très faible. Par ailleurs notamment pour favoriser la trempe des feuilles de verre, les rouleaux de cette seconde zone sont de préférence munis de bagues portant des anneaux en matière plastique souple, par exemple en caoutchouc haute température, et ayant de plus des embouts sphériques pour absorber la flexion du rouleau. La sortie de cette zone de trempe s'effectue de préférence avec l'assistance d'un rouleau basculant 35 tel que décrit dans EP-B-133114, mais en prévoyant de préférence des roulements d'entraînement montés de manière flottante pour tenir compte de la courbure secondaire conférée à la feuille de verre.

Comme on le voit plus particulièrement figure 3, les rouleaux de formage inférieurs 40 sont guidés par un jeu inférieur de tubes 41 et un jeu supérieur 42, montés sur des fourches 43 fixées à des bras support 44 articulés autour d'axes de pivotement fixes 45. Le bras support 44 est posé sur un galet 46 constituant un des sommets d'une pièce triangulaire 47 articulée autour d'un point fixe 48 et dont le dernier sommet 49 est déplacé linéairement par les mouvements d'un vérin 50 commandé par un moteur 51; ainsi en tirant sur le sommet 49, on fait pivoter vers le haut le bras support 44.

Les rouleaux de formage supérieurs 52 sont de même guidés par des tubes montés sur des fourches fixées à des bras 53 pivotant autour d'un axe 54. Le bras supérieur 53 soutient l'ensemble 55 de mise en rotation du rouleau supérieur. Les éléments moteurs sont fixés au bâti de la machine et le mouvement est transmis par un arbre 56 monté articulé. Le bras supérieur 53 repose par l'intermédiaire d'une butée 57 et de cales d'espacement 58 sur une butée 59 portée par le bras inférieur 44 de sorte que les deux bras sont toujours rigoureusement parallèles.

Dans la zone de défilement des feuilles de verre, les rouleaux de formage sont de préférence gainés par un tissu ou un tricot en fibres de silice ou autres fibres réfractaires.

La position des bras 44 et 53 peut être maintenue pendant toute l'opération de formage ou évoluer au cours du temps comme il va maintenant être expliqué en référence à la figure 4.

Cette façon d'opérer suppose que soient connus et l'instant d'entrée d'une feuille de verre dans la machine de bombage-trempe et sa vitesse de défilement, aussi la machine doit-elle être équipée de par exemple deux capteurs de position du bord avant de la feuille de verre. On peut également prévoir un capteur de position et un capteur de mesure de la vitesse de rotation des rouleaux.

A l'instant tₒ - et à tous les instants ultérieurs - , le rayon de courbure principal fixé par le trajet courbe, est égal à R₁ constant. Avec des machines selon l'invention, ce rayon de courbure R₁ peut être avantageusement choisi dans une gamme allant de 1 mètre à l'infini, ou même inférieur à un mètre ce qui peut être obtenu par exemple en réduisant la longueur de la zone de trempe. A ce même instant, toujours dans le cas donné en exemple, la courbure des rouleaux de formage est choisie nulle, les rouleaux ne sont donc pas encore mis en flexion. (rₒ = ∞). A l'instant t₁, le premier ensemble de rouleaux de formage n'est plus au contact du bord avant de la feuille de verre mais par exemple d'une portion centrale de celle-ci. Pour donner une courbure secondaire à cette portion centrale, les rouleaux sont mis en flexion de sorte que la portion centrale est déformée selon un rayon de courbure secondaire r₁. Au même instant t₁, les deux rouleaux plus en aval qui se trouvent maintenant en contact avec le bord avant sont eux toujours droits. De même si on souhaite obtenir une courbure secondaire r₂ différente de r₁ pour le bord arrière, on aura à un instant t₂ une machine de bombage-trempe dont les premiers rouleaux "actifs" sont droits, les rouleaux du second ensemble "actif" ayant au même instant un rayon de courbure r₁ et les rouleaux du troisième ensemble "actif" ont un rayon de courbure égal à r₂. Si la feuille de verre couvre plus de 3 ensembles de rouleaux de formage -ce qui est presque toujours le cas car comme indiqué précédemment le pas du convoyeur est de préférence de l'ordre de seulement 40 mm- le pilotage pourra être éventuellement opéré sur les huit ensembles de rouleaux de formage.

Dès qu'une feuille de verre a achevé son passage au niveau d'un ensemble de formage, cet ensemble reprend son rayon de courbure initial rₒ, prêt à recevoir la feuille de verre suivante, espacée de la feuille de verre précédente d'une distance généralement de l'ordre de la longueur d'un ensemble de formage.

On obtient ainsi un vitrage tel que celui dessiné à la figure 5 avec des génératrices en traits doubles, présentant un bord avant 60 cylindrique, confondu avec celui d'un vitrage à bombage cylindrique représenté avec des génératrices en traits simples, et un bord arrière 61 avec une flèche f très importante.

On a choisi ici de représenter un volume présentant dans le sens de défilement des feuilles de verre une flèche f strictement croissante mais en pratique toutes les fonctions g continues avec g = f (t) peuvent être réalisées avec une machine de bombage selon l'invention dans les limites d'une courbure principale comprise entre 0 et 1 mètre⁻¹ et d'une courbure secondaire comprise entre 0 et 0,05 mètre₁, centrée ou non, et ceci dans une installation où les feuilles de verre défilent sans jamais être arrêtées ou même ralenties, avec une vitesse de défilement qui est avantageusement supérieure à 20 cm/s.

## Revendications

1. Rouleau de formage (1,2,40,52) pour une installation de bombage de feuilles de verre constitué par un cylindre de révolution entraîné en rotation cintré entre deux plans perpendiculaires à l'axe de symétrie du rouleau, chaque plan coupant le rouleau à proximité d'une de ses extrémités, les deux portions extrêmes extérieures aux plans sécants étant maintenues droites.

2. Rouleau de formage selon la revendication 1 caractérisé en ce que chaque portion extrême est guidée par un ensemble d'appuis tangentiels (4,5,6,7) fixés sur un bras support (10) commun pivotant autour d'un axe (13).

3. Rouleau de formage selon la revendication 2 caractérisé en ce que l'axe de pivotement (13) du bras support (10) appartient au plan sécant.

4. Rouleau de formage selon la revendication 2 ou 3 caractérisé en ce que lesdits appuis tangentiels (4,5,6,7) sont des appuis distants ou constitués par un appui d'une relativement grande longueur.

5. Rouleau de formage selon l'une des revendications 2 à 4 caractérisé en ce que lesdits appuis tangentiels (4,5,6,7) sont constitués pour chaque portion extrême de deux jeux de deux tubes, un jeu inférieur et un jeu supérieur, un des jeux étant centré sur le plan sécant.

6. Rouleau de formage selon l'une des revendications 2 à 5 caractérisé en ce que l'extrémité libre (14) du bras support (10) est déplacée verticalement par un levier.

7. Rouleau de formage selon la revendication 6 caractérisé en ce que ledit levier est commandé par une came mécanique ou encore par un vérin pneumatique, hydraulique ou électrique.

8. Rouleau de formage selon l'une des revendications 1 à 7 caractérisé en ce que le cylindre de révolution est en acier inoxydable.

9. Ensemble de deux rouleaux selon l'une des revendications 2 à 8, superposés verticalement caractérisé en ce que le bras support du rouleau supérieur est déplacé par le bras support inférieur.

10. Ensemble de deux rouleaux selon la revendication 9 caractérisé en ce que le bras support inférieur agit sur le bras support supérieur par l'intermédiaire d'une cale d'épaisseur.

11. Machine de bombage et de trempe de feuilles de verre comportant un lit de conformation à profil courbe dans la direction d'avancement des feuilles de verre constitué, au moins pour ce qui concerne la zone de formage (31) des feuilles de verre, par la juxtaposition d'ensembles selon l'une ou l'autre des revendications 9 et 10 disposées selon le profil courbe.

12. Machine de bombage et de trempe de feuilles de verre selon la revendication 11 caractérisée en ce que les derniers rouleaux de formage de la zone de trempe sont munis de bagues en contact avec les feuilles de verre.

13. Machine de bombage et de trempe de feuilles de verre selon la revendication 12 caractérisée en ce que les bagues portent des anneaux en matière plastique souple et ont des embouts sphériques.

14. Machine de bombage et de trempe selon l'une des revendications 11 à 13 caractérisée en ce qu'elle comprend une commande numérique associée à un calculateur pour le pilotage des leviers.

15. Machine de bombage et de trempe selon l'une des revendications 11 à 14 avec un profil courbe à concavité tournée vers le haut caractérisée en ce qu'au dernier rouleau de la zone de trempe est associé un système de basculement dont les roulements d'entraînement sont montés de manière flottante.

16. Application de la machine de bombage selon l'une des revendications 11 à 15 à la production de vitrages dont la courbure principale est comprise entre 0 et 1 mètre⁻¹ et la courbure secondaire entre 0 et 0,05 mètre⁻¹.

17. Application selon la revendication 16 à la production de vitrages présentant une courbure secondaire excentrée.

18. Application selon la revendication 16 ou 17 caractérisée en ce que la courbure secondaire n'est pas constante.

## Claims

1. Shaping roller (1, 2, 40, 52) for a bending installation for glass sheets, constituted of a cylinder of revolution, driven in rotation, curved between two planes perpendicular to the axis of symmetry of the roller, each plane intersecting the roller in proximity of one of its ends, the two extreme portions, external to the intersecting planes, being held straight.

2. Shaping roller according to Claim 1, characterized in that each extreme portion is guided by an assembly of tangential supports (4, 5, 6, 7), fixed to a common support arm (10) pivoting about an axis (13).

3. Shaping roller according to Claim 2, characterized in that the pivot axis (13) of the support arm (10) lies in the intersecting plane.

4. Shaping roller according to Claim 2 or 3, characterized in that said tangential supports (4, 5, 6, 7) are spaced apart supports or supports constituted of a support of relatively great length.

5. Shaping roller according to one of Claims 2 to 4, characterized in that said tangential supports (4, 5, 6, 7) are constituted, for each end portion, of two sets of two tubes, a lower set and an upper set, one of the sets being centred on the intersecting plane.

6. Shaping roller according to one of Claims 2 to 5, characterized in that the free end (14) of the support arm (10) is displaced vertically by a lever.

7. Shaping roller according to Claim 6, characterized in that said lever is controlled by a mechanical cam or by a pneumatic, hydraulic or electrical jack.

8. Shaping roller according to one of Claims 1 to 7, characterized in that the cylinder of revolution is of stainless steel.

9. Assembly of two vertically superimposed rollers according to one of Claims 2 to 8, characterized in that the support arm of the upper roller is displaced by the lower support arm.

10. Assembly of two rollers according to Claim 9, characterized in that the lower support arm acts on the upper support arm through a spacer shim.

11. Bending and toughening machine for glass sheets, comprising a shaping bed having a profile curved in the direction of travel of the glass sheets, constituted, at least in so far as the shaping zone (31) for the glass sheets is concerned, by the juxtaposition of assemblies according to one or other of Claims 9 and 10, disposed along the curved profile.

12. Bending and toughening machine for glass sheets according to Claim 11, characterized in that the last shaping rollers of the toughening zone are provided with rings in contact with the glass sheets.

13. Bending and toughening machine for glass sheets according to Claim 12, characterized in that the rings carry annuli of flexible plastics material and have spherical ferrules.

14. Bending and toughening machine according to one of Claims 11 to 13, characterized in that it comprises a numerical control associated with a computer for operating the levers.

15. Bending and toughening machine according to one of Claims 11 to 14 having a curved profile with upward concavity, characterized in that, with the last roller of the toughening zone there is associated a tilting system, the drive rollers of which are mounted floatingly.

16. Application of the bending machine according to one of Claims 11 to 15 to the production of panes, the principal curvature of which is between 0 and 1 metre⁻¹ and the secondary curvature of which is between 0 and 0.05 metre⁻¹.

17. Application according to Claim 16 to the production of panes having an eccentric secondary curvature.

18. Application according to Claim 16 or 17, characterized in that the secondary curvature is not constant.

## Patentansprüche

1. Formwalze (1,2,40,52) für eine Biegeanlage für Glasscheiben, mit einem in Drehung versetzten Drehzylinder, der zwischen zwei zur Symmetrieachse der Walze senkrechten Ebenen gekrümmt ist, wobei jede Ebene die Walze in der Nähe eines ihrer Enden schneidet, und wobei die beiden Endbereiche, die außerhalb der Schnittebenen liegen, gerade gehalten werden.

2. Formwalze nach Anspruch 1, **dadurch gekennzeichnet, daß** jeder Endbereich durch ein System aus Tangentiallagern (4,5,6,7) geführt wird, die auf einem gemeinsamen, um eine Achse (13) schwenkenden Haltearm (10) befestigt sind.

3. Formwalze nach Anspruch 2, **dadurch gekennzeichnet, daß** die Schwenkachse (13) des Haltearms (10) in der Schnittebene liegt.

4. Formwalze nach Anspruch 2 oder 3, **dadurch gekennzeichnet,** **daß** die Tangentiallager (4,5,6,7) durch entfernte Lager oder durch ein Lager mit einer relativ großen Länge gebildet sind.

5. Formwalze nach einem der Ansprüche 2 bis 4, **dadurch** **gekennzeichnet, daß** die Tangentiallager (4,5,6,7) für jeden Endbereich aus zwei Sätzen aus zwei Rohren gebildet sind, einem unteren Satz und einem oberen Satz, wobei einer der Sätze auf der Schnittebene zentriert ist.

6. Formwalze nach einem der Ansprüche 2 bis 5, **dadurch ge****kennzeichnet**, **daß** das freie Ende (14) des Haltearms (10) durch einen Hebel vertikal verschoben wird.

7. Formwalze nach Anspruch 6, **dadurch gekennzeichnet, daß** der Hebel durch einen mechanischen Nocken oder auch durch einen pneumatischen, hydraulischen oder elektrischen Zylinder betätigbar ist.

8. Formwalze nach einem der Ansprüche 1 bis 7, **dadurch ge****kennzeichnet, daß** der Drehzylinder aus nicht rostendem Stahl ist.

9. System aus zwei vertikal übereinander angeordneten Walzen nach einem der Ansprüche 2 bis 8, **dadurch gekenn****zeichnet, daß** der Haltearm der oberen Walze durch den unteren Haltearm verschoben wird.

10. System aus zwei Walzen nach Anspruch 9, **dadurch gekenn****zeichnet, daß** der untere Haltearm auf den oberen Haltearm mittels einer Distanzscheibe einwirkt.

11. Maschine zum Biegen und Härten von Glasscheiben aus einem Formgebungsbett mit in Transportrichtung der Glasscheiben gebogenem Profil, wobei das Formgebungsbett, zumindest in dem Bereich der Formung (31) der Glasscheiben, durch die gegenüberliegende Anordnung der Systeme nach einem der Ansprüche 9 und 10 entsprechend des gebogenen Profils gebildet ist.

12. Maschine zum Biegen und Härten von Glasscheiben nach Anspruch 11, **dadurch gekennzeichnet, daß** die letzten Formwalzen des Härtebereichs mit Ringen in Kontakt mit den Glasscheiben versehen sind.

13. Maschine zum Biegen und Härten von Glasscheiben nach Anspruch 12, **dadurch gekennzeichnet, daß** die Kontaktringe Ringe aus biegsamem Kunststoff tragen und sphärische Ansätze haben.

14. Maschine zum Biegen und Härten von Glasscheiben nach einem der Ansprüche 11 bis 13, **dadurch gekennzeichnet,** **daß** sie eine numerische Steuerung aufweist, die mit einem Rechner zur Steuerung der Hebel verbunden ist.

15. Maschine zum Biegen und Härten nach einem der Ansprüche 11 bis 14 mit einem gekrümmten Profil mit nach oben gewandter Konkavität, **dadurch gekennzeichnet, daß** mit der letzten Walze des Härtebereichs ein Kippsystem verbunden ist, dessen Antriebsrollen schwimmend angeordnet sind.

16. Verwendung der Biegemaschine nach einem der Ansprüche 11 bis 15 zur Herstellung von Verglasungen, deren Hauptkrümmung zwischen 0 und 1 Meter⁻¹ und deren Sekundärkrümmung zwischen 0 und 0,05 Meter⁻¹ liegt.

17. Verwendung nach Anspruch 16 zur Herstellung von Verglasungen, die eine exzentrisch angeordnete Sekundärkrümmung aufweisen.

18. Verwendung nach Anspruch 16 oder 17, **dadurch gekenn****zeichnet, daß** die Sekundärkrümmung nicht konstant ist.
